(19) **Europäisches Patentamt**

**European Patent Office**

**Office européen des brevets**

(11) **EP 0 725 107 B1**

(12) **EUROPEAN PATENT SPECIFICATION**

(45) Date of publication and mention
of the grant of the patent:
**30.07.2003 Bulletin 2003/31**

(51) Int Cl.[7]: **C08K 5/17**, C08K 5/524,
C08K 3/36

(21) Application number: **96300383.5**

(22) Date of filing: **19.01.1996**

(54) **Phosphite stabilization of polyolefins containing silica supported catalyst**

Stabilisation von Polyolefinen, die Silica-gestützten Katalysator enthalten, mittels Phosphit

Stabilisation à l'aide de phosphite des polyoléfines contenant de catalysateur à support en silice

(84) Designated Contracting States:
**DE ES FR GB IT NL**

(30) Priority: **03.02.1995 US 383772**

(43) Date of publication of application:
**07.08.1996 Bulletin 1996/32**

(73) Proprietor: **GENERAL ELECTRIC COMPANY**
**Schenectady, NY 12345 (US)**

(72) Inventors:
• **Gardner, Pamela**
**Reno, Ohio 45773 (US)**

• **Enlow, William Palmer**
**Belpre, Ohio 45714 (US)**
• **Mahood, James Alan**
**Morgantown, West Virginia 26505 (US)**

(74) Representative: **Szary, Anne Catherine, Dr. et al**
**London Patent Operation,**
**GE International, Inc.,**
**Essex House,**
**12-13 Essex Street**
**London WC2R 3AA (GB)**

(56) References cited:
**EP-A- 0 200 684       DE-A- 4 418 080**
**US-A- 3 179 621**

**Description**

**BACKGROUND OF THE INVENTION**

**Field of the Invention**

The present invention relates to phosphite stabilization of polyolefins, more particularly relates to phosphite stabilization of polyolefins utilizing catalyst carried on a silica support.

**Description of the Related Art**

Phosphite stabilization of polyolefins is generally known. Recent developments in catalysis of olefins to produce polyolefin polymers has resulted in utilization of various types of carriers for supporting the catalyst used. Specifically, recent developments in chromium based catalysts for the production of polyolefins has resulted in the development of various catalyst carrying systems, including specifically the development of silica based supports for carrying such chromium catalysts. Utilization of silica supports, however, has resulted in undesirable side effects on the phosphites. Silica sources also include antiblock additives which are added to polymer formulations to prevent polymer films from adhering to each other, and these silicas can also result in undesirable effects on the phosphites.
Consequently, there is a need to develop compositions which successfully resist hydrolysis of the phosphite and polyolefin compositions containing residual silica supports or silica antiblock additives.

**Summary of the Invention**

The present invention involves polyolefin compositions containing residual amounts of silica supports, and effective amount of a phosphite stabilizer, and an effective amount of a polyamine at levels sufficient to enhance the phosphites resistance to the silica support. It is believed that the silica support undesirably cause the phosphite to undergo transesterification. Preferably the phosphite is present in the polyolefin composition at relatively high levels, and the polyamine is present in the compositions at lesser amounts than phosphite. The polyamine/phosphite combination could also be used in polymer compositions containing silica antiblock additives.

**Detailed Description of the Invention**

A critical aspect of one embodiment of the present invention is the utilization of silica supports to carry the catalyst in the production of the polymer. Additionally, the present polymers have a residual amount of silica support in the catalyst present in the polymer at a level of at least 50 parts per million based on the total weight of the polymer, more typically between 50 parts per million and 1000 parts per million based on the total weight of the polymer. The polymers are polyolefins. The term polyolefin includes homopolymers and copolymers to alpha-olefins. Typical polyolefins include polyethylene, polypropylene, ethylene-propylene copolymer, ethylene-butylene copolymer. Preferred polyolefin is high density polyethylene.
The phosphites may be used in an effective amount in polyolefin compositions for stabilization thereof. An amount of the phosphites of the invention is considered to be an "effective amount" when the polymer composition containing the phosphites of the invention shows improved stability in any of its physical or color properties in comparison to an analogous polymer composition which does not include a phosphite of the invention. In most polymer compositions, however, it will be preferred that the phosphites (or phosphonites) be present in an amount equal to about 0.01 to about 2 percent by weight based on the total weight of the polymer composition, more preferably from about 0.01 to about 1 percent by weight thereof, and most preferably from 0.025 to 0.05 percent by weight thereof. Preferably the polymers are thermoplastic in nature.
The polymer is polyolefin homopolymers and copolymers. Mixtures thereof with different polymers, such as polyphenylene ether/styrenic resin blends, polyvinyl chloride/ABS or other impact modified polymers, such as methacrylonitrile and alphamethylstyrene containing ABS, and polyester/ABS or polycarbonate/ABS and polyester plus some other impact modifier may also be used. Such polymers are available commercially or may be made by means well known in the art. However, the phosphites of the invention are particularly useful in thermoplastic polyolefins.
Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE) and linear low density polyethylene (LLDPE) may be used. Mixtures of these polymers, for example, mixtures of polypropylene with polyisobutylene, polypropylene with polyethylene (for example PP/HDPE, PP/LDPE) and mixtures of different types of polyethylene (for example LDPE/HDPE), may also be used. Also useful are copolymers of monoolefins and diolefines with each other or with other vinyl monomers, such as, for example. ethylene/ propylene, LLDPE and its mixtures with LDPE, propylene/butene-1, ethylene/hexene, ethylene/ethylpentene, ethylene/ heptene, ethylene/octene, propylene/ isobutylene, ethylene/butane-1, propylene/butadiene, isobutylene, isoprene, ethylene/alkyl acrylates, ethylene/alkyl methacrylates, ethylene/vinyl acetate (EVA) or ethylene/acrylic acid copolymers (EAA) and their salts (ionomers) and terpolymers of ethylene with propylene and a diene, such as hexadiene, dicyclopentadiene or ethylidene-norbornene; as well as mixtures of such copolymers and their mixtures with polymers mentioned above, for example polypropylene/ethylene propylene-copolymers, LDPE/EVA, LDPE/EAA, LLDPE/EVA and LLDPE/EAA.

Thermoplastic polymers may also include styrenic polymers, such as polystyrene, poly-(p-methylstyrene), poly-(α-methylstyrene), copolymers of styrene or α-methylstyrene with dienes or acrylic derivatives, such as, for example, styrene/butadiene, styrene/acrylonitrile, styrene/alkyl methacrylate, styrene/maleic anhydride, scyrene/butadiene/ethyl acrylate, styrene/acrylonitrile/methylacrylate, mixtures of high impact strength from styrene copolymers and another polymer, such as, for example, from a polyacrylate, a diene polymer or an ethylene/propylene/diene terpolymer; and block copolymers of styrene, such as, for example, styrene/butadiene/styrene, styrene/isoprene/styrene, styrene / ethylene / butylene / styrene or styrene/ethylene/propylene styrene. Styrenic polymers may additionally or alternatively include graft copolymers of styrene or alpha-methylstyrene such as, for example, styrene on polybutadiene, styrene on polybutadiene-styrene or polybutadiene-acrylonitrile; styrene and acrylonitrile (or methacrylonitrile) on polybutadiene and copolymers thereof; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/-propylene/diene terpolymers, styrene and acrylonitrile on polyacrylates or polymethacrylates, styrene and acrylonitrile on acrylate/butadiene copolymers, as well as mixtures of with the styrenic copolymers indicated above.

Nitrile polymers are also useful in the polymer composition of the invention. These include homopolymers and copolymers of acrylonitrile and its analogs, such as polymethacrylonitrile, polyacrylonitrile, acrylonitrile/-butadiene polymers, acrylonitrile/alkyl acrylate polymers, acrylonitrile/alkyl methacrylate/butadiene polymers, and various ABS compositions as referred to above in regard to styrenics.

Polymers based on acrylic acids, such as acrylic acid, methacrylic acid, methyl methacrylic acid and ethacrylic acid and esters thereof may also be used. Such polymers include polymethylmethacrylate, and ABS-type graft copolymers wherein all or part of the acrylonitrile-type monomer has been replaced by an acrylic acid ester or an acrylic acid amide. Polymers including other acrylic-type monomers, such as acrolein, methacrolein, acrylamide and methacrylamide may also be used.

Halogen-containing polymers may also be useful. These include resins such as polychloroprene, polyvinyl chloride, polyvinyl bromide, polyvinyl fluoride, polyvinylidene chloride, chlorinated polyethylene, chlorinated polypropylene, florinated polyvinylidene, brominated polyethylene, chlorinated rubber, vinyl chloride-vinylacetate copolymers, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride tercopolymer, vinyl chloride-styrene-acrylonitrile copolymer, vinyl chloride-butadiene copolymer, vinyl chloride isoprene copolymer, vinyl chloride-chlorinated propylene copolymer, vinyl chloride-vinylidene chloride-vinyl acetate tercopolymer, vinyl chloride-acrylic acid ester copolymers, vinyl chloride-maleic acid ester copolymers, vinyl chloride-methacrylic acid ester copolymers, vinyl chloride-acrylonitrile copolymer and internally platicized polyvinyl chloride.

Polyolefin, styrenic resins, and mixtures thereof are more preferred, with polyethylene, polypropylene, polystyrene, high impact polystyrene and ABS-type graft copolymers and mixtures thereof being particularly preferred.

The resulting stabilized polymer compositions of the invention may optionally also contain various conventional additives, such as the following:

1. Antioxidants

1.1 Alkylated monophenols, for example: 2,6-di-tertbutyl-4-methylphenol. 2-tert-butyl-4,6-dimethylphenol, 2,6-di-tert-butyl-4-ethylphenol, 2,6-di-tert-butyl-4-n-butylphenol, 2,6-di-tert-butyl-4-isobucylphenol, 2,6-dicyclopentyl-4-methylphenol, 2-(alpha-methylcyclohexyl)-4,6 dimethylphenol, 2, 6-di-octadecyl-4-methylphenol, 2,4,6,-tricyclohexyphenol, 2,6-di-tert-butyl-4-methoxymethylphenol.

1.2 Alkylated hydroquinones, for example, 2,6-di-tert-butyl-4-methoxyphenol, 2,5-di-tert-butyl-hydroquinone, 2,5-di-tert-amyl-hydroquinone, 2,6-diphenyl-4octadecyloxyphenol.

1.3 Hydroxylated thiodiphenyl ethers, for example, 2,2'-thio-bis-(6-tert-butyl-4-methylphenol), 2,2'-thio-bis-(4-octylphenol), 4,4'thio-bis-(6-tert-butyl-3-methylphenol), 4,4'-thio-bis-(6-tert-butyl-2-methylphenol).

1.4 Alkylidene-bisphenols, for example, 2,2'-methylene-bis-(6-tert-butyl-4-methylphenol), 2,2'-methylene-bis-(6-tert-butyl-4-ethylphenol), 2,2'-methylene - bis - ( 4 - methyl - 6 - ( alpha-methylcyclohexyl)phenol), 2,2'-methylene-bis-(4-methyl-6-cyclohexylphenol), 2,2'-methylene-bis-(6-nonyl-4-methylphenol), 2,2'-mechylene-bis-(6-nonyl-4-methylphenol), 2,2'-methylene-bis-(6-(alpha-methylbenzyl)-4-nonylphenol), 2,2'-methylene-bis-(6-(alpha,alpha-dimechylbenzyl)-4-nonyl-phenol). 2.2'-methylene-bis-(4,6-di-tert-butylphenol), 2,2'-ethylidene-bis-(6-tert-butyl-4-isobutylphenol), 4,4'-methylene-bis-(2,6-di-tert-butylphenol), 4,4'-methylene-bis-(6-tert-butyl-2-methylphenol), 1,1-bis-(5-tert-butyl-4-hydroxy-2-methylphenol)butane. 2,6-di-(3-tert-butyl-5-methyl-2-hydroxybenzyl)-4-methylphenol, 1,1,3-tris-(5-tert-butyl-4-hydroxy-2-methylphenyl)butane, 1,1-bis-(5-tert-butyl-4-hydroxy-2-methylphenyl)-3-dodecyl-mercaptobutane, ethyleneglycol-bis-(3,3-bis-(3'-tert-butyl-4'-hydroxyphenyl)-butyrate)-di-(3-tert-butyl-4-hydroxy-5-methylphenyl)-dicyclopentadiene, di-(2-(3'-tert-butyl-2'hydroxy-5'methyl-benzyl)-6-tert-butyl-4-methylphenyl)terephthalate.

1.5 Benzyl compounds, for example, 1,3,5-tris-(3,5-di-tert-butyl-4-hydroxybenzyl)-2,4,6-trimethylbenzene, bis-(3,5-di-tert-butyl-4-hydroxybenzyl)sulfide, isooctyl 3,5-di-tert-butyl-4-hydroxybenzyl-mercapto-acetate, bis-(4-tert-butyl-3-hydroxy-2,6-dimethylbenzyl)dithiol-terephthalate. 1 , 3 , 5 - tris - ( 3 , 5 - d i - tert - butyl - 4-hydroxybenzyl)isocyanurate. 1,3,5-tris-(4-tert-butyl-3-hydroxy-2,6-dimethylbenzyl)isocyanurate, dioctadecyl 3,5-di-tert-butyl-4-hydroxybenzyl-phosphonate, calcium salt of monoethyl 3,5-di-tert-butyl-4-hydroxybenzylphosphonate, 1,3,5-tris-(3,5-dicyclohexyl-4-hydroxybenzyl)isocyanurate.

1.6 Acylaminophenols, for example, 4-hydroxy-lauric acid anilide, 4-hydroxy-stearic acid amilide, 2,4-bis-octylmercapto-6-(3,5-tert-butyl-4-hydroxyanilino)-s-triazine, octyl-N-(3,5-di-tert-butyl-4-hydroxyphenyl)-carbamate.

1.7 Esters of beta-(3,5-di-tert-butyl-4-hydroxyphenoi)-propionic acid with monohydric or polyhydric alcohols, for example, methanol, diethyleneglycol, octadecanol, triethyleneglycol, 1,6-hexanediol, penta-erythritol, neopentylglycol, tris-hydroxyethyl isocyanurate, thiodiethyleneglycol, di-hydroxyethyl oxalic acid diamide.

1.8 Esters of beta-(5-tert-butyl-4-hydroxy-3-methylphenyl)-propionic acid with monohydric or polyhydric alcohols, for example, methanol, diethyleneglycol, octadecanol, triethyleneglycol, 1,6-hexanediol, pentaerythritol, neopentylglycol, tris-hydroxyethyl isocyanurate, thidiethyleneglycol, dihydroxyethyl oxalic acid diamide.

1.9 Esters of beta-(5-tert-butyl-4-hydroxy-3-methylphenyl) propionic acid with mono-or polyhydric alcohols, e. g., with methanol, diethylene glycol, octadecanol, triethylene glycol, 1,6-hexanediol, pentaerythritol, neopentyl glycol, tris(hydroxyethyl) isocyanurate, thiodiethylene glycol, N,N-bis(hydroxyethyl) oxalic acid diamide.

1.10 Amides of beta-(3,5-di-tert-butyl-4-hydroxyphenol)-propionic acid for example, N,N'-di-(3,5-di-tert-butyl-4-hydroxyphenylpropionyl)-hexamethylen-diamine, N,N'-di-(3,5-di-tert-butyl-4-hydroxyphenylpropionyl)trimethylenediamine, N,N'-di-(3,5-di-tert-butyl-4-hydroxyphenylpropionyl)-hydrazine.

2. UV absorbers and light stabilizers.

2.1 2-(2'-hydroxyphenyl)-benzotriazoles, for example, the 5'methyl-,3'5'-di-tert-butyl-,5'-tert-butyl-,5' (1,1,3,3-tetramethylbutyl)-,5-chloro-3',5'-di-tert-butyl-,5-chloro-3'tert-butyl-5'methyl-,3'sec-butyl-5'tert-butyl-, 4'-octoxy,3',5'-ditert-amyl-3',5'-bis-(alpha, alpha-dimethylbenzyl)-derivatives.

2.2 2-Hydroxy-benzophenones, for example, the 4-hydroxy-4-methoxy-,4-octoxy,4-decyloxy-,4-dodecyloxy-, 4-benzyloxy,4,2',4'-trihydroxy-and 2'hydroxy-4,4'-dimethoxy derivative.

2.3 Esters of substituted and unsubstituted benzoic acids for example, phenyl salicylate, 4-tert-butylphenyl-salicilate, octylphenyl salicylate, dibenzoylresorcinol, bis-(4-tert-butylbenzoyl)-resorcinol, benzoylresorcinol, 2,4-di-tert-butyl-phenyl-3,5-di-tert-butyl-4-hydroxybenzoate and hexadecyl-3,5-di-tert-butyl-4-hydroxybenzoate.

2.4 Acrylates, for example, alpha-cyano-beta, beta-diphenylacrylic acid-ethyl ester or isooctyl ester, alpha-carbomethoxy-cinnamic acid methyl ester, alpha-cyano-beta-methyl-p-methoxy-cinnamic acid methyl ester or butyl ester, alpha-carbomethoxy-p-methoxy-cinnamic acid methyl ester, N-(beta-carbomethoxy-beta-cyano-vinyl)-2-methyl-indoline.

2.5 Nickel compounds, for example, nickel complexes of 2,2'-thio-bis(4-(1,1,1,3-tetramethylbutyl)-phenol), such as the 1:1 or 1:2 complex, optionally with additional ligands such as n-butylamine, triethanolamine or N-cyclohexyl-diethanolamine, nickel dibutyldithiocarbamate, nickel salts of 4-hydroxy-3,5-di-tert-butylbenzylphosphonic acid monoalkyl esters, such as of the methyl, ethyl, or butyl ester, nickel complexes of ketoximes such as of 2-hydroxy-4-methyl-penyl undecyl ketoxime, nickel complexes of 1-phenyl-4-lauroyl-5-hydroxy-pyrazole, optionally with additional ligands.

2.6 Sterically hindered amines, for example bis(2,2,6,6-tetramethylpiperidyl)-sebacate, bis-(1,2,2,6,6-pentamethylpiperidyl)-sebacate, n-butyl-3,5-di-cert-butyl-4-hydroxybenzyl malonic acid bis(1,2,2,6,6,-pentamethylpiperidyl)ester, condensation product of 1-hydroxyethyl-2,2,6,6-tetramethyl-4-hydroxy-piperidine and succinic acid, condensation product of N,N'-(2,2,6,6-tetramethylpiperidyl)-hexamethylendiamine and 4-tert-octylamino-2,6-dichloro-1,3,5-s-triazine, tris-(2,2,6,6-tetramethylpiperidyl)-nitrilotriacetate, tetrakis-(2,2,6,6-tetramethyl-4-piperidyl)-1,2,3,4-butane-tetra-carbonic acid, 1,1'(1,2-ethanediyl)-bis-(3,3,5,5-tetramethylpiperazinone). Such amines include hydroxylamines derived from hindered amines, such as di(1-hydroxy-2,2,6,6-tetramethylpiperidin-4-yl)sebacate: 1-hydroxy 2,2,6,6-tetramethyl-4-benzoxypiperidine; 1-hydroxy-2,2,6,6-tetramethyl-4-(3,5-di-tert-butyl-4-hydroxy hydrocinnamoyloxy)-piperdine; and N-(1-hydroxy-2,2,6,6-tetramethyl-piperidin-4-yl)-epsiloncaprolactam.

2.7 Oxalic acid diamides, for examples, 4,4'-dioctyloxy-oxanilide, 2,2'-di-octyloxy-5',5'-di-tert-butyloxanilide, 2,2'-di-dodecyloxy-5',5'di-tert-butyl-oxanilide, 2-ethoxy-2'-ethyl-oxanilide, N,N'-bis(3-dimethylaminopropyl)-oxalamide, 2-ethoxy-5-tert-butyl-2'-ethyloxanilide and its mixture with 2-ethoxy-2'ethyl-5,4-di-tert-butyloxanilide and mixtures of ortho-and para-methoxy-as well as of o-and p-ethoxy-disubstituted oxanilides.

3. Metal deactivators, for example, N,N'-diphenyloxalic acid diamide, N-salicylal-N'-salicyloylhydrazine, N,N'-bis-salicyloyihydrazine, N,N'-bis-(3,5-di-tert-butyl-4-hydrophenylpropionyl)-hydrazine, salicyloylamino-1,2,4-triazole, bis-benzyliden-oxalic acid dihydrazide.

4. Peroxide scavengers, for example, esters of betathiodipropionic acid, for example the lauryl, stearyl, myristyl or tridecyl esters, mercaptobenzimidazole or the zinc salt of 2-mercaptobenzimidazole, zinc-dibutyldithiocaramate, dioctadecyldisulfide, pentaerythritoltetrakis-(beta-dodecylmercapto)-propionate.

5. Polyamide stabilizers, for example copper salts in combination with iodides and/or phosphorus compounds and salts of divalent manganese.

6. Basic co-stabilizers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example, Ca stearate, calcium stearoyl lactate, calcium lactate, Zn stearate, Mg stearate, Na ricinoleate and K palmitate, antimony pyrocatecholate or zinc pyrocatecholate.

7. Nucleating agents, for example, salts of benzoic, 4-tert butylbenzoic acid, adipic acid, diphenylacetic acid.

8. Fillers and reinforcing agents, for example, calcium carbonate, silicates, glass fibers, asbestos, talc, kaolin, mica, barium sulfate, metal oxides and hydroxides, carbon black and graphite.

9. The present invention may also be used in conjunction with aminoxy propanoate derivatives such as methyl-3-(N,N-dibenzylaminoxy)propanoate;ethyl-3-(N,N-dibenzylaminoxy)propanoate; 1,6-hexamethylene-bis(3-N,N-dibenzylaminoxy)propanoate); methyl-(2-(methyl)-3(N,N-dibenzylaminoxy)propanoate); octadecyl-3-(N,N-dibenzylaminoxy)propanoic acid; tetrakis (N,N-dibenzylaminoxy)ethyl carbonyl oxymethy)methane; octadecyl-3-(N,N-diethylaminoxy)-propanoate; 3-(N,N-dibenzylaminoxy)propanoic acid potassium salt; and 1,6-hexamethylene bis (3-(N-allyl-N-dodecyl aminoxy)propanoate).

10. Other additives, for example, plasticizers, lubricants, emulsifiers, pigments, optical brighteners, flameproofing agents, anti-static agents, blowing agents and thiosynergists such as dilaurythiodipropionate or distearylthiodipropionate.

The polymer compositions may contain or be free of the above additives.

Polymeric particles containing residual silica supports may be coated with the present phosphites and polyamines alone or in combination with other stabilizers for stabilization of the polymeric material. Particles may be spherical in shape and may be made by processes such as "Reactor Granule Technology" as disclosed in P. Galli and J.C. Halock, The Reactor Granule - A Unique Technology for the Production of a New Generation of Polymer Blends, Society of Plastics Engineers, Polyolefin III International Conference February 24-27, 1991 and as disclosed in Pedrazzeth et al. U.S. 4708979 entitled Process for the Stabilization of Spherically Polymerized Polyolefins issued November 24, 1987 both of which are disclosed herein by reference. Particle formation may be achieved by supported Ziegler-Natta Catalyst systems. Suitable commercial processes are known by the trademarks: Spheripol, Adipol and Spherilene.

The olefin polymers are produced by polymerization of olefins in the presence of Ziegler-Natta catalysts or Chromium (Cr) catalysts supported on silica. They may also be produced utilizing catalysts based on cyclopentadiene complexes of metals, typically complexes of Ti or Zr. Silica also is used to support chromium catalysts ($CrC_1H_5)_3$ $SiO_2$. Examples of silica ($SiO_2$) supported catalyst systems include $CrO_3/SiO_2$, $Cr(C_3H_5)_3$ $SiO_2$ and $Zr(S_3H_5)_4/SiO_2$. Catalyst systems are also described in Catalytic Olefin Polymerization, Chapter 29, pp. 377-400, T. Keil, K. Soga editors 1989, Symposium Tokyo, Japan, Oct. 23-25, Elsevier publisher. Coordination Polymerisation, James C.W. Chien, Academic Press 1975.

Consistent with the invention, the phosphites of the invention may be added to the polymer at any time prior to or during fabrication into articles and may be combined with the polymer by any of a variety of means known in the art, such as by preblending or by being fed directly into fabrication equipment.

The polypropylene compositions may include residual catalyst such as Ziegler catalysts carried on the silica supports (i.e. $TiCl_3$ on $MgCl_2$). Other stabilizers may also be incorporated in the compositions.

The aliphatic polyamine preferably has a boiling point of greater than 175°, more preferably greater than 190°, and most preferably greater than 200°C. The polyamines are aliphatic primary diamines of the formulas

$$H_2N - R^1 - NH_2$$

wherein $R^1$ is selected from $C_6$ to $C_{10}$ divalent alkyl radicals, and more preferably the diamine is selected from 1,6 diamine hexane and 1,10-diaminodecane.

The stabilizer composition of phosphite and polyamine comprises from 10 percent by weight to 99.9 percent by weight of the phosphite based on the total weight of the stabilizer composition, more preferably from 90 to 99.8 percent by weight thereof, more preferably from 95 to 99.5 percent by weight thereof. The polyamine, is present at a level of at least 5 percent by weight based on the total weight of said phosphite. The polyamine is preferably present at a level of from 0.1 to 10 percent by weight based on the total weight of the stabilizer composition, more preferably from 0.2 to 5 percent by weight thereof. Preferably the stabilizer composition is present in the polymer composition at a level of from 0.01 to 2.0 percent by weight based on the total weight of the polymer composition, more preferably from 0.01 to 1.0 percent by weight thereof, and most preferably from 0.03 to 0.10 percent by weight thereof. Preferably the polyamine is present in the polymer composition at a level of from 0.001 to 0.2 percent by weight based on the total weight of the polymer composition, more preferably from 0.001 to 0.1 percent by weight thereof, and most preferably from 0.001 to 0.002 percent by weight thereof. The polyamine is preferably present at a level in the polymeric composition at a level such that the silica support is present in the thermoplastic composition at a level of from 1 to 50 percent based on the total weight of the polyamine, more preferably from 2 to 20 percent by weight thereof, and most preferably from 5 to 10 percent by weight thereof. The total stabilizer composition is preferably in the form of amorphous (non-crystalline) particles, such as powders and pellets. In the case of powders these preferably have a size selected from between 10 μm to 2mm. The stabilizer composition preferably contains less than 10 percent by weight of other materials such as polymeric materials and other organic materials such as waxes, synthetic and petroleum dried lubricating oils and greases; animal oils such as for example fat, tallow, lard, cod liver oil, sperm oil; vegetable oil such as caster, linseed, peanut, cod seed, and the like; fuel oil, diesel oil, gasoline, and the like. In other words, the stabilizer composition, is preferably substantially free of other materials, in other words, containing less than 1 percent of other organic materials, and more preferably is free of other organic materials. The compositions of the present invention are preferably amorphous to ensure homogeneity of the compositions. The present compositions are preferably obtained by melt mixing rather than simple mechanical blending or solution blending, and surprisingly and unexpectedly the compositions made by melt mixing show superior hydrolytic stability over similar compositions made by simple mechanical (dry) or solution blending.

The phosphite may be replaced in entirety or in part with a phosphonite. Phosphites and phosphonites, for example, triphenyl phosphite, diphenylalkyl phosphites, phenyldialkyl phosphites, tris(nonyl-phenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, bis(2,4-di-tert-butylphenyl)pentaerythritol diphosphite tristearyl sorbitol triphosphite, and tetrakis(2,4-di-tert-butylphenyl)4,4'-biphenylene diphosphonite.

The preferred phosphite is bis(2,4-di-t-butylphenyl) pentaerythritol diphosphite. Preferably the diamine is 1,6-hexane diamine. The ratio of amine is at least 1:50. Suitable silica type catalysts include $SiO_2$ with a high surface are (typically 100-1000m$^2$/g polymer by BET absorption isotherm) and good porosity (typically 5-50 nm). Suitable catalysts to be carried on the supports include chromium based catalysts such as chromocene and silyl chromate and chromium trioxide. Silica antiblocks include CABOSIL fumed silica. Silica antiblock loadings in polymer compositions are typically 100 ppm to 1000 ppm based on the total weight of the polymer.

**Examples**

The following examples illustrate the enhanced performance achieved by the present compositions over compositions utilizing conventional neutralizers and monoamines.

The silica adverse affect on the phosphite (bis 2,4 di-t-butylphenyl) pentaerythritol diphosphite occurs even under conditions which are free of water vapor such as where the polymer (high density polyethylene) has been dried and blanketed with argon gas indicating that the silica may be causing the phosphite to undergo transesterification. The amine at high loadings relative to the phosphite was also able to protect the phosphite from premature degradation under conditions of elevated temperature (60°C) and relative humidity of 75%. Phos 1 is bis(2,4 di-t-butylphenyl) pentaerythritol diphosphite. HMDA is hexamethylene diamine. DFWL is days to fifty (50%) percent weight loss of phosphite. Amounts are parts per million based on a million parts by weight of polymer (HDPE). The compositions contained a hindered phenol sold as Irganox 1010 available from Ciba Geigy at a level of 500 ppm.

Table 1

|        | A    | 1    | 2    | 3    |
|--------|------|------|------|------|
| Phos 1 | 500  | 500  | 500  | 500  |
| HMDA   | 0    | 100  | 50   | 25   |
| DFWL   | <7   | >84  | >40  | ≈35  |

The relatively high loadings of polyamine relative to the phosphite provides the phosphite with enhanced protection from silica supports.

Phos 2 is tris(2,4-di-tert-butylphenyl) phosphite, Phos 3 is tetrakis-(2,4-di-tert-butyl-phenyl(-4,4'-biphenylene diphosphonite), Phos 4 is bis 2,6-di-t-butyl-4-methyl-phenyl-pentaerythritol diphosphite, Phos 5 is trisnonylphenyl phosphite with 1% by weight tri isopropanol amine.

**Table 2**

| | B | C | 4 | 5 | D | 6 | E | 7 |
|---|---|---|---|---|---|---|---|---|
| Phos 2 | 500 | | 500 | | | | | |
| Phos 3 | | 500 | | 500 | | | | |
| Phos 4 | | | | | 500 | 500 | | |
| Phos 5 | | | | | | | 500 | 500 |
| HMDA | 0 | 0 | 100 | 100 | 0 | 100 | 0 | 100 |
| DFWL | >84 | <7 | >84 | >84 | <7 | >84 | 7-14 | >84 |

While the comparative example B and example 4 are not differentiated in the DFWL values above, it is believed by the present inventors that an enhancement in performance would be evidenced in the formulation of example 4 over comparative example B if a more extended testing period or a more rigorous test was employed.

HALS1 is dimethyl succinate polymer with 4-hydroxy-2,2,6,6-tetramethyl-1-piperidineethanol (Tinuvin 662LD); HALS 2 is bis(2,2,6,6-tetramethyl-4-piperidinyl)decanedioate (Tinuvin 770); HALS 3 is hexane-1,6-diamine, N,N-bis(-2,2,6,6,-tetramethyl-4-piperidinyl(Cyasorb UV-3346).

**Table 3**

|        | F    | G    | 8    | 9    | H    | 10   | 11   | I    | 12   | 13   |
|--------|------|------|------|------|------|------|------|------|------|------|
| Phos 1 | 1000 | 1000 | 1000 | 1000 | 1000 | 1000 | 1000 | 1000 | 1000 | 1000 |
| HALS1  | 0    | 10   | 50   | 100  |      |      |      |      |      |      |
| HALS2  |      |      |      |      | 10   | 50   | 100  |      |      |      |
| HALS3  |      |      |      |      |      |      |      | 10   | 50   | 100  |
| DFWL   | <2   | <2   | <6   | 14   | <6   | >58  | >58  | <6   | 31   | >58  |

The formulations of Tables 2 and 3 further included 500 ppm of Iraganox 1010 phenolic antioxidant. The above amounts are in parts per million based on the total weight of high density polyethylene resins used therein. The high density polyethylene resins contained residual amounts of chromium catalyst and silica support.

**Claims**

1. A polyolefin composition comprising:

    (a) residual silica support,
    (b) a phosphite or phosphonite stabilizer; and
    (c) an aliphatic primary diamine having the formula $H_2N$-$R^1$-$NH_2$ where $R^1$ is selected from $C_6$ to $C_{10}$ divalent alkyl radicals, present at a level of at least 5 percent by weight based on the total weight of said phosphite.

2. The polyolefin composition of claim 1, wherein said phosphite or phosphonite is selected from the group consisting of: triphenyl phosphite, diphenylalkyl phosphites, phenyl dialkyl phosphites, tris(nonyl--phenyl)phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, tristearyl sorbitol triphosphite and tetra-kis(2,4-di-tert-butylphenyl)-4,4'biphenylene diphosphonite.

3. The polyolefin composition of claim 2 wherein said phosphite is present at a level of at least 100 parts per million based on the total weight of the polyolefin composition.

4. The polyolefin composition of claim 3 wherein said diamine is present at a ratio of at least 1:50 relative to said phosphite.

5. The polyolefin composition of claim 1 wherein said diamine is present at a level of at least 100 parts per million based on the total weight of the polyolefin composition.

6. The potyolefin composition of claim 1 wherein said diamine is 1,6-hexanediamine.

7. The polyolefin composition of claim 1 wherein said phosphite is present at a level of at least 100 parts per million based on the total weight of the composition, and said phosphite is a pentaerythritol diphosphite.

8. The polyolefin composition of claim 1 further comprising (d) a fumed silica antiblocking agent.

**Patentansprüche**

1. Eine Polyolefinzusammensetzung aufweisend:

    (a) restlichen Silicaträger,
    (b) einen Phosphit- oder Phosphonit-Stabilisator; und
    (c) ein aliphatisches primäres Diamin mit der Formel $H_2N$-$R^1$-$NH_2$, worin $R^1$ ausgewählt ist aus den divalenten $C_6$ bis $C_{10}$ Alkylresten, das in einer Menge von wenigstens 5 Gew.-% bezogen auf das gesamte Gewicht des Phosphits, vorhanden ist.

2. Polyolefinzusammensetzung nach Anspruch 1, **dadurch gekennzeichnet, dass** das Phosphit oder Phosphonit ausgewählt ist aus der Gruppe bestehend aus: Triphenylphosphit, Diphenylalkylphosphiten, Phenyldialkylphosphiten, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentaerythritdiphosphit, Bis(2,4-di-tert-butylphenyl)pentaerythritdiphosphit, Tristearylsorbittriphosphit und Tetrakis(2,4-di-tert-butylphenyl)-4,4'biphenylendiphosphonit.

3. Polyolefinzusammensetzung nach Anspruch 2, **dadurch gekennzeichnet, dass** das Phosphit in einer Menge von wenigsten 100 Teilen auf eine Million vorhanden ist bezogen auf das Gesamtgewicht der Polyolefinzusammensetzung.

4. Polyolefinzusammensetzung nach Anspruch 3, **dadurch gekennzeichnet, dass** das Diamin in einem Verhältnis von wenigstens 1:50 relativ zum Phosphit vorhanden ist.

5. Polyolefinzusammensetzung nach Anspruch 1, **dadurch gekennzeichnet, dass** das Diamin in einer Menge von wenigstens 100 Teilen auf eine Million bezogen auf das Gesamtgewicht der Polyolefinzusammensetzung vorhanden ist.

6. Polyolefinzusammensetzung gemäß Anspruch 1, **dadurch gekennzeichnet, dass** das Diamin 1,6-Hexandiamin ist.

7. Polyolefinzusammensetzung gemäß Anspruch 1, **dadurch gekennzeichnet, dass** das Phosphit in einer Menge von wenigstens 100 Teilen auf eine Million bezogen auf das Gesamtgewicht der Zusammensetzung vorhanden ist und dass das Phosphit Pentaerythritdiphosphit ist.

8. Polyolefinzusammensetzung gemäß Anspruch 1, weiterhin aufweisend (d) ein pyrogenes Siliciumdioxid als Antihaftmittel.

## Revendications

1. Composition à base de polyoléfine qui comprend :

   (a) un support de silice résiduel,
   (b) un stabilisant du type phosphite ou phosphonite, et
   (c) une diamine aliphatique primaire de formule $H_2N-R^1-NH_2$ dans laquelle $R^1$ représente un radical alkylène divalent en $C_6$ à $C_{10}$, qui est présente à raison d'au moins 5 % en poids par rapport au poids total dudit phosphite.

2. Composition à base de polyoléfine selon la revendication 1, pour laquelle ledit phosphite ou phosphonite est choisi parmi le phosphite de triphényle, les phosphites de diphényle et d'alkyle, les phosphites de phényle et de dialkyle, le phosphite de tris(nonylphényle), le phosphite de trilauryle, le phosphite de trioctadécyle, le diphosphite de distéaryle et de pentaérythritol, le phosphite de tris(2,4-di-tert-butylphényle), le diphosphite de diisodécyle et de pentaérythritol, le diphosphite de bis(2,4-di-tert-butylphényle) et de pentaérythritol, le triphosphite de tristéaryle et de sorbitol et le 4,4'-biphénylène diphosphonite de tétrakis(2,4-di-tert-butylphényle).

3. Composition à base de polyoléfine selon la revendication 2, dans laquelle ledit phosphite est présent à raison d'au moins 100 parties par million par rapport au poids total de la composition à base de polyoléfine.

4. Composition à base de polyoléfine selon la revendication 3, dans laquelle ladite diamine est présente selon un rapport par rapport audit phosphite d'au moins 1:50.

5. Composition à base de polyoléfine selon la revendication 1, dans laquelle ladite diamine est présente à raison d'au moins 100 parties par million par rapport au poids total de la composition à base de polyoléfine.

6. Composition à base de polyoléfine selon la revendication 1, pour laquelle ladite diamine est la 1,6-hexanediamine.

7. Composition à base de polyoléfine selon la revendication 1, dans laquelle ledit phosphite est présent à raison d'au moins 100 parties par million par rapport au poids total de la composition, et ledit phosphite est un diphosphite de pentaérythritol.

8. Composition à base de polyoléfine selon la revendication 1, qui comprend en outre (d) de la silice fumée comme agent anti-adhérence de contact.